# EUROPÄISCHE PATENTSCHRIFT

(11) **EP 1 841 524 B1**
(45) Veröffentlichungstag und Bekanntmachung des Hinweises auf die Patenterteilung: **24.07.2013**
(21) Anmeldenummer: 06706504.5
(22) Anmeldetag: 26.01.2006
(51) Int. Cl.: B01J 19/18, B01F 7/04

(54) **REAKTOR ZUR KONTINUIERLICHEN UND GLEICHZEITIGEN HERSTELLUNG VERSCHIEDENER UND VARIABEL VISKOS EINSTELLBARER POLYESTERPRODUKTE MIT REGELUNG DES PROZESSFORTSCHRITTES ÜBER DAS / DIE HYDRAULISCHE (N) ANTRIEBS SYSTEM (E)**
REACTOR FOR THE CONTINUOUS AND SIMULTANEOUS PRODUCTION OF DIFFERENT POLYESTER PRODUCTS HAVING ADJUSTABLE VARIABLE VISCOSITY, THE PROGRESS OF THE PROCESS BEING REGULATED VIA THE HYDRAULIC DRIVE SYSTEM/S
REACTEUR POUR LA PRODUCTION EN CONTINU ET SIMULTANEE DE DIFFERENTS PRODUITS POLYESTER A VISCOSITE POUVANT ETRE AJUSTEE DE MANIERE VARIABLE, AVEC REGULATION DE L'AVANCE DU PROCESSUS VIA UN OU PLUSIEURS SYSTEMES D'ENTRAINEMENT HYDRAULIQUES

(30) Priorität: 26.01.2005 DE 102005003731
(43) Veröffentlichungstag der Anmeldung: 10.10.2007
(73) Patentinhaber: Epc Industrial Engineering GmbH, 63755 Alzenau (DE)
(72) Erfinder: STRENG, Michael, 63477 Maintal (DE); SCHÄFERSKÜPPER, Clifford, 49143 Schledehausen (DE); HILPERT, Andreas, 63571 Geinhausen (DE)
(74) Vertreter: Meissner, Bolte & Partner
(86) Internationale Anmeldenummer: PCT/EP2006/000807
(87) Internationale Veröffentlichungsnummer: WO 2006/079557

(56) Entgegenhaltungen:
- EP-A- 0 711 597
- EP-A- 0 719 582
- DE-A1-102004 014 163
- US-A- 3 386 810
- US-A- 3 484 213
- US-A- 3 630 688
- US-A- 4 153 766
- US-A- 4 801 433
- US-A- 5 245 057
- US-A- 6 096 838
- US-A1- 2004 076 073

## Beschreibung

Die Erfindung betrifft einen Reaktor für fließfähige hochviskose bzw. pastöse Medien nach den Merkmalen im Oberbegriff des Hauptanspruchs.

In DE-OS 102 00 230 A1 wird ein Rührantrieb für stehende und liegende Reaktoren beschrieben, der als hydraulischer Motor gestaltet ist. Die Anordnung des Motors wurde direkt im Reaktor vorgenommen, wobei zum Antrieb das in den Reaktor eingesetzte Produkt als Hydraulikmedium verwendet wird. Die Zuführung des Hydraulikmediums erfolgt über Rohrleitung an den Antrieb, die Erzeugung der Antriebsenergie wird von einer außenstehenden Pumpstation vorgenommen. Dieses Produkt wird nach der Übertragung der Antriebsleistung für den Rührer als Reaktand in den Reaktor eingetragen und hier zur weiteren Reaktion geführt.

Bei dieser Lösung muss bei einer Störung oder Havarie der im Reaktor angeordneten Antriebsmechanik der Reaktionsprozess abgefahren werden und eine Reparatur durch Öffnen zur Atmosphäre erfolgen. Außerdem wird hierbei eine Steuerung des Prozesses durch die Verwendung des Signals aus einer Messgröße des Antriebssystems nicht angewendet. Die Verwendung des Produktes als Hydraulikmedium hätte hierbei auch den Nachteil, dass das Produkt infolge der prozessbedingten zeitlichen Änderung seiner Konsistenz keine konstante Basis für die Erzeugung unabhängiger Signale zur Prozesssteuerung aufweist.

Die Patentschrift DE 40 13 912 C2 stellt einen horizontal ausgerichteten Reaktor vor, der mit einem außenwirkenden und einem innenwirkenden Rotor ausgerüstet ist, wobei die Rotoren ineinander drehen und sich dabei das Produkt von ihren benetzten Flächen abschaben. Ziel ist eine effiziente Mischung und Verteilung des Produktes zur Schaffung einer großen Oberfläche und einer damit verbundenen hohen Entgasung. Nachteilig bei dieser Vorrichtung ist der Einsatz der beiden hierzu erforderlichen Getriebe und der resultierende Abstand des Schwerpunktes des Antriebssystems von der Reaktorwand. Weiterhin kann die apparativ aufwendige Anordnung des Abstreifrotors in dem käfigartigen Rotor eine mögliche Störquelle sein bezüglich der Einhaltung der Spiele der Abstreifelemente zu den Ringscheiben des Käfigläufers und der hohen Rotorlänge sowie der möglichen Durchbiegung der Rotoren.

Aus der Veröffentlichung DE 44 47 422 C2 ist eine Reaktorvorrichtung bekannt, die mit einem Rotor mit gitterförmigen Ausbrüchen im Hohlkörper und mit aufgesetzten Lochscheiben und Speichenrädern versehen ist. In den Zwischenräumen der Lochscheiben und Speichenräder sind im Bereich des Polymersumpfes an der Reaktorwand Wehranordnungen und stabförmige Abstreiferstäbe installiert. Der Reaktor wird über seine Länge durch Verringerung der Abstände und Variation der Anstellwinkel der Lochscheiben und Speichenräder auf dem Hohlkörper in Zonen unterteilt oder geometrisch verändert gemäß der Konsistenz des Produktes. Mit dieser Lösung wird das Ziel verfolgt, mit einer einfachen Konstruktion eine verbesserte Stabilität gegen Verdrehung und Durchbiegung sowie eine hohe Durchmischung und Gleichmäßigkeit der Verweilzeit des Produktes und damit hohe Produktqualität zu erreichen. Der Nachteil ist auch in dieser Lösung die Anordnung der Wehre und Abstreiferstäbe zwischen den Lochscheiben und Speichenrädern in Bezug auf mögliche Verwerfungen und damit Berührungen durch Kräfte aus dem Produkt während der Rotorbewegung.

In DE OS 100 01 477 A 1 ist ein diskontinuierliches Polykondensationsverfahren mit Rührscheibenreaktor vorgestellt. Dieser Reaktor ist auf diskontinuierlichen Betrieb ausgelegt, in dem sich das Moment als Funktion der ansteigenden Viskosität über die Zeit in der Vakuum appliziert wird, einstellt. Eine Regelung wie in einem kontinuierlichen Prozess erforderlich, erfolgt nicht. Auch die Geometrie des Rührscheiben Reaktors ist klar auf diskontinuierlichen Betrieb ausgelegt.

Aus der AS 1745541 ist ein Polykondensationsverfahren und - vorrichtung bekannt, in der ein Ringscheibenreaktor beschrieben wird. Dieser Ringscheibenreaktor besteht aus mehreren Zonen, die jedoch ausschließlich als Ringscheiben ausgeführt werden. Eine aktive Aufnahme von Reaktionsmaterial auf die Ringscheiben wird nicht beschrieben. Des weiteren. erzeugen die Ringscheiben hohe Reibung, die sich in Form von Temperaturerhöhungen, welche ausgeregelt werden müssen, negativ bemerkbar macht.

Der Einsatz von Regelgetrieben ist aufwendig, und die Prozessdaten können in dieser Konfiguration nicht als aktiver Bestandteil der Regelung des Prozesses herangezogen werden.

AS 1495665 stellt ein Verfahren und Vorrichtung zum kontinuierlichen Durchsatz von Schmelzen bei der Herstellung von Polykondensationsprodukten vor. Diese Konstruktion zeichnet sich im wesentlichen durch ringförmige Stauelemente aus. Hinzu kommen Verstreich- und Verteileinrichtungen.

Die in dieser Konstruktion beschriebenen Stauelemente sind verfahrenstechnisch ungünstig, da sich an diesen Stauelementen Reaktionsmaterial aufbauen kann, was im verlauf der Zeit thermisch abgebaut wird und zu einer Beeinflussung der Produktqualität führen kann. Auch wird in dieser Vorrichtung vergleichsweise geringe reaktive Oberfläche erzeugt. Dies würde zwangsläufig die Abmessungen bei hohen Durchsätzen in die Höhe treiben.

AS 1645630 beschreibt eine durch Zwischenwände gekammerte Vorrichtung für die Polykondensation von flüssigen Vorkondensaten. Die Rührwerkselemente sind schraubenförmig ausgeführt, was den Transport des Reaktionsmaterials in Richtung Produktaustritt unterstützt.

Diese Vorrichtung erfordert eine aufwändige Konstruktion der Kammerwände. Durch die Kammern wird eine homogene Produktdurchmischung schwierig. Ferner wirken hier die durch die Kammern erzeugte Verweilzeit der positive Förderung des Reaktionsprodukts in Richtung des Produktaustrags entgegen.

In OS 1570939 wird ein Polymerisationsapparat vorgestellt, in dem mittels käfigartigen und wellenlosen Schraubensegmenten oder -läufen das Reaktionsmaterial durch den Apparat gefördert wird.

Durch den schraubenartigen Aufbau der Konstruktion erfolgt eine deutlich beschleunigte Förderung des Reaktionsmaterials. Dadurch wird die Verweilzeit verringert und folglich muss der Apparat bei höheren Durchsätzen größer dimensioniert werden. Die Regelung der Parameter des Reaktionsmaterials, die einen heutigen Apparat gefordert wird, wird dabei gar nicht behandelt.

In der Offenlegungsschrift 1925093 ist eine Vorrichtung zum Fertigkondensieren von Polykondensationsprodukten beschrieben. Mit der hier vorliegende Vorrichtung wird über eine Vielzahl von, zum Teil höchst komplizierte, unterschiedlichen Einbauten, und unterschiedlichen Scheiben und Abstreifer Einbauten versucht reaktive Oberfläche zu schaffen.

Die vorgestellten Einbauten neigen zur Verschmutzung und zum thermischen Abbau von anhaftendem Material. Einbauten müssen daher so einfach wie möglich realisiert werden.

Bei allen recherchierten Veröffentlichungen wurde keine Maßnahme zur Verwendung von Prozessparametern aus dem Betrieb des Rotors und deren Einflussnahme zur Regelung des Prozesses gefunden. Weiterhin ist der Einsatz schwerer Antriebe mit relativ hohem Abstand des Schwerpunktes von der Reaktor-Stirnseite nicht befriedigend oder es ist die Gestaltung der Rotoren häufig aufwendig. Die hohen Massen der Antriebsaggregate mit relativ langen Hebelarmen bewirken große Biegekräfte auf die Rotoren, die Rotorwellen, die Stirnseiten der Reaktoren und die Dichtsysteme gegen das im Reaktor herrschende Vakuum, die sich beim Betrieb negativ auf den gesamten Reaktor und Spalte zwischen Rotorelementen und Einbauten auswirken, vor allem dann, wenn Gleitflächen mit minimiertem Spiel zwischen Rotorelementen und angelagerten Gehäuseelementen oder innenlaufenden Rotoren angewendet werden.

Die Erfindung hat zur Aufgabe, eine Vorrichtung zur Behandlung von fließfähigen hochviskosen bzw. pastösen Medien im Vakuum, wie z.B. Polyester oder anderen Polymeren, zu schaffen, die Messgrößen aus dem Betrieb verwendet zur gezielten sensiblen Regelung des Prozesse mit dem Ziel der Erzeugung sehr hoher Qualitätswerte für das Produkt bis zu einer intrinsischen Viskosität von 0,9 dl/g, die weiterhin durch Einsatz geeigneter Antriebe eine Minimierung der statischen und dynamischen Kräfte auf den Reaktor erreicht, und die durch vorteilhaftes Design des Reaktors und der Rotoren das Verfahren und den Betrieb verbessert.

Diese Aufgabe wird durch die Merkmale des Patentanspruchs 1 gelöst. Weitere Ausgestaltungen sind in den abhängigen Ansprüchen dargestellt:
1. Der Reaktor ist in 2 bis 4 Reaktionszonen aufgeteilt, die mit jeweils separat wirkenden Rotoren ausgerüstet sind. Die Rotoren werden dazu von je einem eigens zugehörigen Hydrauliksystem angetrieben, welche von außenstehenden Pumpstationen versorgt werden. Die Rotoren können dabei wie folgt angeordnet sein:
   a. für den Reaktor mit 2 Reaktionszonen ist die Grundwelle in 2 Wellen ausgebildet, auf denen die Rotoren befestigt sind und die an ihren jeweiligen zueinanderliegenden Enden im Reaktorinneren und jeweils an den Stirnseiten des Reaktors gelagert werden.
   b. für den Reaktor mit 3 Zonen erfolgt die Befestigung des Rotors der Reaktionszone II auf einer Grundwelle, durch den Reaktor geführt und an den Stirnseiten gelagert wird. Die Rotoren der Reaktionszonen I und III werden als Hohlwellen ausgeführt und einmal auf der Grundwelle im Reaktorinneren und zum Anderen jeweils in der linken und rechten Stirnwand des Reaktors gelagert, wobei sie die Stirnwände durchstoßen.
   c. für den Reaktor mit 3 Reaktionszonen kann die Grundwelle auch wie unter Punkt "a" in 2 geteilten Wellen ausgebildet sein und eine Hohlwelle auf einer Grundwelle in der unter "b" beschriebenen Weise gelagert ist.
   d. für den Reaktor mit 4 Zonen wird auf jeder der beiden Grundwellen eine Hohlwelle gelagert, wie in der Ausführung "c" für 3 Zonen beschrieben.

   Die Hydraulikmotoren sind jeweils außen an der Stirnwand des Reaktors angeordnet und mit den Grund- und Hohlwellen verbunden. Der Betrieb des Hydraulikmotors erfolgt mit Hydraulikmedium, dessen Konsistenz im Betrieb mittels Temperaturregelung konstant gehalten wird. Diese konstanten Bedingungen gewährleisten eine sichere Basis für die Messung und Verarbeitung einer Messgröße in Form der Drücke im Hydraulikmedium. Aus den Drücken des Hydraulikmediums wird das für die fest eingestellte Drehzahl des Rotors erforderliche Drehmoment ermittelt. Dieses Drehmoment gibt bei ebenfalls gleichbleibender Füllung des Reaktors und konstanter Produkttemperatur genauen Aufschluss über die intrinsische Viskosität des Produkts. Die Messung der intrinsischen Viskosität erfolgt gemäß ASTM D4603 oder ISO 1628-5 für Polyethylentherephtalat. Hierzu wird eine Probe des PET in 60/40 Phenol / 1,1, 2,2 Tetrachloroethan gelöst. Unter Anwendung der Billmeyer-Gleichung wird daraus die intrinsische Viskosität in der Dimension [dl/g] ermittelt.
   Die so erzielten Messwerte dienen als Regelparameter für das Vakuum im Reaktionsraum, mittels dem die endgültige Produktviskosität eingestellt wird. Der ermittelte Wert für die intrinsische Viskosität des Produkts im Reaktor wird mit dem Wert des dem Reaktor nachgeschalteten Viskosimeters verglichen und gegebenenfalls korrigiert.
   Des weiteren wird die Betriebssicherheit des Reaktors nach Stillständen und Havarien durch den hydraulischen Antrieb verbessert. Hierzu kann der Antrieb auf einem für den Rotor unkritischen Drehmoment auf Nenndrehzahl hochlaufen. Eine Beschädigung durch zu hohe Viskositäten oder eingefrorenes Produkt wird vermieden.
3. Für eine Entnahme von Produkt verschiedener Viskositäten zur separaten Weiterverarbeitung sind im Sumpf des Reaktors eine oder mehrere Produktausträge installiert. Die Rotoren sind nach einem Produktaustrag jeweils mit einem ersten Rotorbereich zur Förderung des Produktes in Richtung des nächsten Produktaustrages ausgestattet. Dieser vermeidet den Austrag von Produkt höherer Viskosität aus dem Reaktorabschnitt nach diesem Produktaustrag. Daran anschließend folgt ein Rotorbereich zur Quervermischung des Produktes.
4. Die Reaktionszonen des Reaktors sind mit separaten, individuell regelbaren Beheizungen ausgestattet, die eine gezielte Prozessführung gewährleisten.
5. Die Schmelze tritt entweder über eine unterspiegeligen Zuführung in den Produktsumpf in den Reaktor oder über eine oder mehrere Einträge oberhalb des Produktsumpfes (überspiegelige Anordnung) ein. Diese überspiegeligen Einträge sind als Schlitzdüsen ausgebildet, in denen keine Bereiche von Produktablagerungen in Form von nicht-beströmten Räumen vorliegen (totraumfrei). Die Schmelze wird auf die Rotorscheiben verteilt und erfährt dabei eine proaktive Verteilung zur intensiven Entgasung. Eine Produktaufnahmevorrichtung, gebildet von Schaufeln, die zwischen den Scheiben des Rotors der Reaktionszone I angebracht sind, unterstützt diese proaktive Verteilung. Diese Schaufeln nehmen Produkt aus dem Sumpf auf und verteilen es während der Rotation über die Scheiben, womit eine hohe spezifische Oberfläche generiert wird, die für die Reaktion notwendig ist. Die Schaufeln sind, so perforiert, dass zum Einen der Rückfluss des Produktes aus den Schaufeln kurz nach Aufnahme beginnt und eine höchstmögliche Verteilung erfolgt, zum Anderen ein Leerlaufen der Schaufeln bei einem etwaigen Stillstand des Rotors gewährleistet ist.
6. Der Rotor in der letzten Reaktionszone ist als räumliches Gitter oder als perforierte Scheiben gestaltet, welche gemäß der vorherrschenden hohen Schmelzviskosität eine verstärkt Oberflächen generierende Produktvermischung bewirken und die Erzeugung von Produkt mit einer intrinsischen Viskosität von 0,9 dl/g ermöglicht. Hierbei wird auch die statische Festigkeit gegen Durchbiegung und Torsion des Rotors durch zusätzlich eingebrachte Zugstäbe erhöht.
7. Die Installation von Zugstäben an der Peripherie mit Verankerungen an der Welle erhöht die Festigkeit der Rotoren gegen Durchbiegung und Torsion.

Die Vorteile der erfindungsgemäßen Gestaltung der Vorrichtung sind durch folgende Punkte gegeben:
1. Reaktor mit mehreren separat gleich oder gegenläufig arbeitenden Rotoren, die unterschiedliche Zonen bewirken, welche das Produkt gemäß den Erfordernissen der Prozessführung zur Herstellung hochviskoser Polymere positiv beeinflussen.
2. Verlustarmer, ruhiger und mit geringeren Drehzahlen arbeitender Antrieb der Rotoren mit je einem getrennt wirkenden Hydrauliksystem, Vermeidung des Einsatzes von Getrieben.
3. Verwendung von Messgrößen aus dem hydraulischen Antriebssystem für ein verwertbares sensibles Signal zur Steuerung des Prozesses bei der Erzeugung der erwünschten Viskosität. Dabei Ausschluss von Störgrößen, wie sie z.B. bei einem elektrischen Antrieb durch erforderliche Getriebe und durch mechanischen Verschleiß entstehen.
4. Verringerung der Masse des Antriebes und des Abstandes seines Schwerpunktes von der Stirnseite des Reaktors gegenüber elektrischen Antrieben, damit Vermeidung hoher Biegemomente auf den Rotor und des Verschleißes für das Antriebssystem.
5. Gewährleistung einer ersten proaktiven Verteilung des Produktes durch Eintritt in den Reaktor über eine Schlitzdüse und / oder durch Aufnahme von Produkt aus dem Sumpf und nachfolgender Verteilung mittels Produktaufnahmevorrichtung in Form von Schaufeln in erfindungsgemäßer Gestaltung. Verbesserung und höhere Effizienz der Entgasung für die Schmelze.
6. Installation mehrerer Austrage zur fraktionellen Entnahme von Produkt nach gezielt erzeugter Viskosität aus einem Gesamtprozess. Durch erfindungsgemäße Gestaltung der Rotoren wird dabei ein Produktaustrag aus der Reaktorsektion nach der Austragsstelle vermieden.
7. Erfindungsgemäße Gestaltung des Rotors in der letzten Zone des Reaktors zur Entgasung des Produktes und zur Erzeugung hoher intrinsischer Viskosität bis 0,9 dl/g.
8. Minimierung der Durchbiegung der Rotoren, Verringerung des Verschleißes an den Lagern und der Energieaufnahme, ruhiger Betrieb und positive Auswirkung auf den Prozess.

Die erfindungsgemäße Vorrichtung wird in einem nachfolgenden Ausführungsbeispiel näher erläutert. In der Zeichnung sind die Einzelheiten dargestellt:

Es zeigen:
- Fig. 1 einen Reaktor mit 3 Reaktionszonen,
- Fig. 2 die Darstellung der Antriebssysteme und der Steuerung des Prozesses,
- Fig. 3 die Darstellung eines Details der Produktaufnahmevorrichtung
- Fig. 4 die Gestaltung der Grundwelle sowie einen Ausschnitt aus der räumlichen

### Gitterkonstruktion für den Bereich der Quervermischung des Rotors der Reaktionszone III

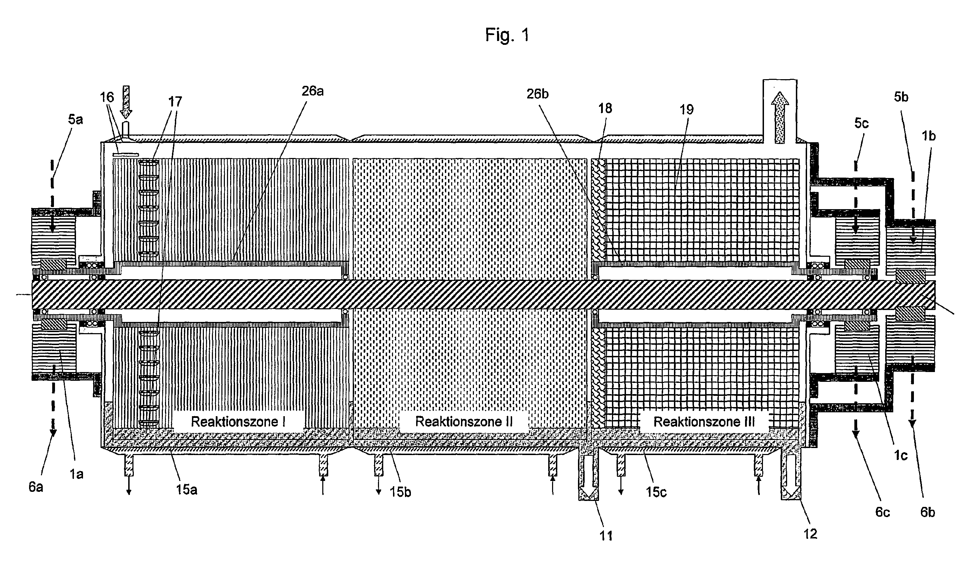

In Fig. 1 ist ein Reaktor mit 3 Reaktionszonen zur kontinuierlichen Entgasung von Reaktionsprodukten aus einer Carbonsäure mit einem mehrfunktionalen Alkohol dargestellt. Er verfügt über 3 hydraulische Antriebe 1a, 1b und 1c für die 3 Rotoren der Reaktionszonen I, II und III. Die Antriebe für die Rotoren sind über Vorlaufleitungen 5 a-c und Rücklaufleitungen 6 a-c jeweils mit hydraulischen Systemen verbunden. Die hydraulischen Antriebe zeichnen sich aus durch geringe Masse, steuerbare niedrige Drehzahlen, Verwendung der Betriebsparameter der Antriebe zur Regelung der Reaktion.

Der Rotor der Reaktionszone II ist auf einer durchgehenden Grundwelle 25 befestigt, die auf der linken Seite in den Innenlagern der Hohlwelle des Rotors der Reaktionszone I und auf der rechten Seite in den Innenlagern des Rotors der Reaktionszone III gelagert ist. Der Rotor für die

Reaktionszone I ist auf einer Hohlwelle 26a fixiert, die auf der linken Seite gegen die Stirnseite des Reaktors und auf der rechten Seite auf der Grundwelle gelagert ist. Der Rotor für die Reaktionszone III ist ebenfalls auf einer Hohlwelle 26b fixiert, die auf der rechten Seite gegen die Stirnseite des Reaktors und auf der linken Seite auf der Grundwelle gelagert ist. Die Lager der Wellen können die Wärmeausdehnung der Rotoren, sowie des Reaktorgehäuses ausgleichen.

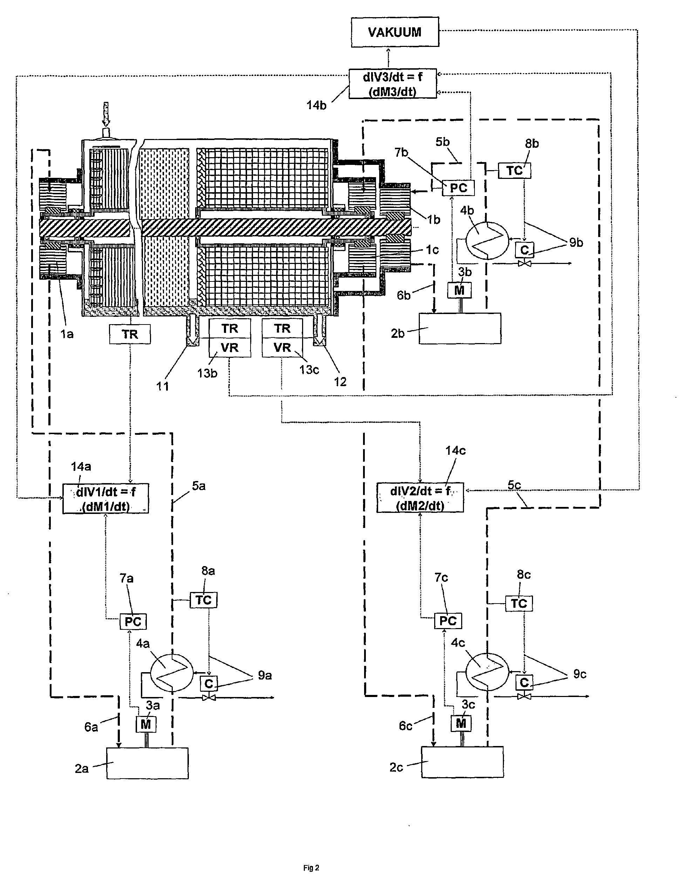

Die hydraulischen System für die Antriebe 1 a-c der Rotoren sind in Fig. 2 dargestellt. Diese Systeme bestehen aus je einer Pumpstation 2 a-c einem Motor 3 a-c für den Energieeintrag, einem Kühler 4 a-c zur Kühlung des Hydraulikmediums, vorzugsweise Hydrauliköl, Vorlaufleitung 5 a-c und Rücklaufleitung 6 a-c für das Hydraulikmedium, einer Druckmessung 7 a-c in der Vorlaufleitung 5 a-c einer Temperaturmessung 8 a-c zur Regelung 9 a-c der Temperatur des Hydraulikmediums mit Steuerung auf die Kühlmittelmenge im Kühler 4 a-c. Nach der Reaktionszone II ist ein erster Produktaustrag 11 für das Produkt mit einer intrinsischen Viskosität von 0,6 bis 0,65 dl/g installiert, ein zweiter Produktaustrag 12 für das hochviskose Produkt mit einer intrinsischen Viskosität bis zu 0,9 dl/g befindet sich am Ende des Reaktors. Die Werte für diese Viskositäten und die jeweilige Produkttemperatur werden von den zugeordneten Messstellen 13 b, c gemessen. Zur Messwerterfassung und Verarbeitung der Daten für die Prozessführung werden in den Messwertverarbeitungen 14 a-c verwertbare Regelsignale erzeugt, die jeweils auf die Druckregelungen 7 a-c gesendet werden. Dies erfolgt dadurch, dass die von Messstelle 13 in Abhängigkeit von der Produkttemperatur gemessene intrinsische Viskosität in Relation zu den von dem hydraulischen Führungssystem (oder auch Mittelwert oder Mittelwerten der hydraulischen Systeme) ermittelten Drehmoment gesetzt wird. Die sich daraus ergebenden Regelgrößen regeln das Vakuum im System, worüber die Zielviskosität des Produkts mit deutlich geringeren Totzeiten in der Regelung eingestellt und konstant gehalten werden kann, als dies bei herkömmlichen Systemen der Fall ist. Zusätzlich wird zum Erreichen hoher Zielviskositäten im Polymer eine Regelung der Rotor- bzw. Rührerdrehzahl vorgesehen.

Aus den Drücken des Hydraulikmediums wird das für die fest eingestellte Drehzahl des Rotors erforderliche Drehmoment ermittelt. Dieses Drehmoment gibt bei ebenfalls gleichbleibender Füllung des Reaktors und konstanter Produkttemperatur genauen Aufschluss über die intrinsische Viskosität des Produkts. Die so erzielten Messwerte dienen als Regelparameter für das Vakuum im Reaktionsraum, mittels dem die endgültige Produktviskosität eingestellt wird. Der ermittelte Wert für die intrinsische Viskosität des Produkts im Reaktor wird mit der des dem Reaktor nachgeschalteten Viskosimeter verglichen und gegebenenfalls korrigiert.

Hier erfolgt eine Verarbeitung direkt auf die Antriebsmotoren 3 a-c in der Art, dass bei geringer geforderten Drücken 7 a-c die hydraulische Antriebsleistung jeweils gedrosselt und bei höher geforderten Drücken jeweils erhöht wird. Diese erfindungsgemäße Steuerung ist wesentlich sensibler als eine alternative Verarbeitung von Drehmomenten bei elektrischen Antrieben. In diesen Fällen sind zwischengeschaltete Störgrößen, wie z.B. Getriebeverluste, Schlupf und Verschleiß verantwortlich für fehlerhafte Messungen und nicht zufriedenstellende Prozessführung. Die Ausgabe des in der Messwertverarbeitung 14 erarbeiteten Steuersignals auf den Druck 7 a-c im Hydraulikvorlauf und die daraus erfolgende Steuerung des Antriebsmotors 3 a-c für das Hydrauliksystem ist eine von äußeren Störungen freie Signalverarbeitung und optimal für eine sehr effiziente Prozessführung zur Erzielung höchster Produktqualitäten. Die Richtungen für die Rotordrehungen können gleich- oder gegenläufig sein. Die Drehzahlen können verschieden eingestellt werden.

Die Reaktionszonen I bis III sind vorteilhaft mit je einer separat gesteuerten Beheizung 15a bis 15c ausgerüstet, mit denen gezielt die Prozesstemperaturen des Produktes in den Reaktionszonen eingestellt werden können. Dies hat den Vorteil einer verbesserten Prozessführung mittels einer gezielten Temperaturbeeinflussung.

Der Eintrag des Produktes in den Reaktor erfolgt durch ein oder mehrere oberhalb des Produktsumpfes angeordnete Schlitzdüsen 16 (überspiegelige Anordnung). Die Einmündungen der Schlitze in den Produktraum befinden sich unmittelbar in Höhe des Beginns des Rotors für die Reaktionszone I und liegen auf der Seite der nach oben gerichteten Rotorbewegung. Sie sind unter einem Winkel von 75° und 20° gegen die Senkrechte installiert. Die Schlitze sind so ausgeführt, dass keine Toträume für Ablagerungen entstehen. Mit dieser Verteilung wird das Produkt direkt am Eintritt auf die Scheiben gegebenen, wodurch schneller als bei einer Zugabe über den Produktsumpf die notwendige Reaktionsoberfläche generiert wird.

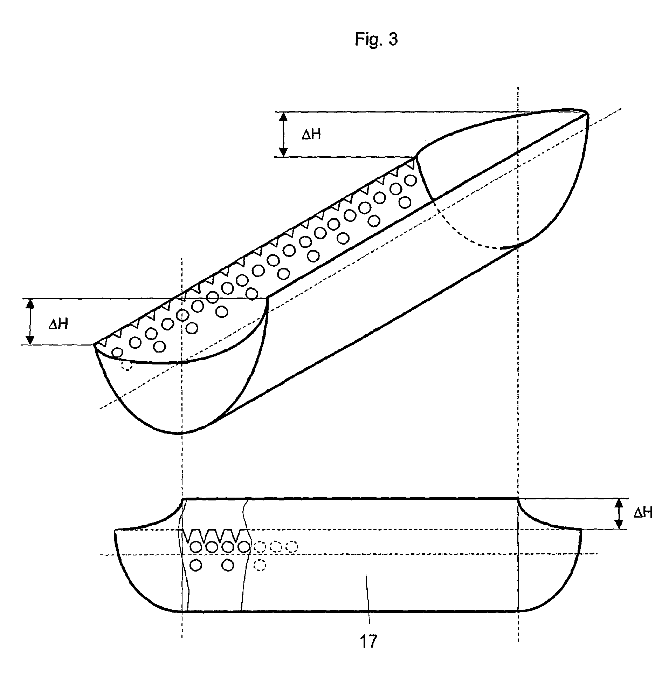

Zur weiteren Erhöhung der notwendigen Reaktionsoberfläche ist am Umfang des Rotors der Reaktionszone I unmittelbar nach Lage der Schlitzdüsen eine Produktaufnahme in Form von Schaufeln 17 installiert, die zwischen mehreren Scheiben befestigt sind. Diese Schaufeln entnehmen bei der Bewegung des Rotors aus dem Sumpf Produkt. Während der Drehung nach oben läuft das Produkt aus der perforierten Rückwand zurück auf die Scheiben. Die Perforation ist dabei so angeordnet, dass der Ausfluss mit steigendem Winkel der Drehung zunimmt. Damit wird die Generierung der zur Reaktion notwendigen Oberfläche zusätzlich zum Mitnahmeeffekt der Scheiben aktiv unterstützt. Die Schaufeln sind ohne Toträume ausgeführt. Die Rückwand der Schaufeln liegt tiefer als die Vorderwand. Diese Produktaufnahme kann auch in der Reaktionszone II installiert werden. Die Gestaltung der Schaufeln ist in Fig. 3 dargestellt.

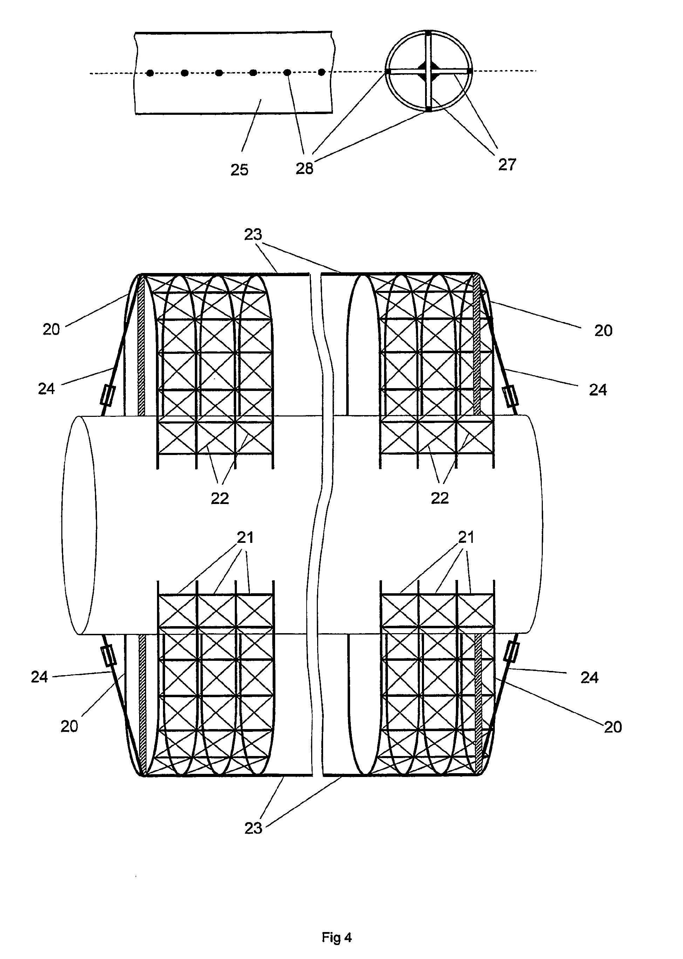

Der Reaktor ist mit zwei Produktabgängen ausgerüstet. Der erste Abgang 11 dient der Entnahme von Produkt mit einer intrinsischen Viskosität im Bereich von 0,6 bis 0,65 dl/g, der zweite Abgang 12 dient der Entnahme des Endproduktes mit einer intrinsischen Viskosität von bis zu 0,9 dl/g. Somit wird gewährleistet, dass 2 Produktqualitäten aus der Reaktion entnommen werden können. Der Rotor der Reaktionszone III nach dem Produktabgang 11 verfügt über zwei funktionale Bereiche. In dem ersten Bereich ist eine Vorrichtung 18 zur Erzielung einer positiven Förderung des Produktes in Richtung des zweiten Abgangs und der Vermeidung eines Rückflusses von Produkt aus dem Raum nach dem zweiten Abgang installiert. Der zweite Bereich beinhaltet eine räumliche Gitterkonstruktion 19 zur intensiven Mischung, Quervermischung und Generierung von notwendiger Reaktionsoberfläche des hochviskosen Produktes in der Reaktionszone III und damit zur effizienten Reaktion des Produktes. Die Gitterkonstruktion ist in Fig. 4 dargestellt. Sie besteht aus in Ebenen angeordneten U-Bogen 20 aus Rundstäben. Die Lagen aus den U-Bogen sind auf der Hohlwelle befestigt und werden jeweils mit Abstandsstäben 21, ebenfalls Rundstäben gleichen Durchmessers, parallel verbunden. In den von den U-Bogen und Abstandsstäben jeweils gebildeten Flächen sind weitere zwei Stäbe 22 kreuzweise befestigt, so dass eine möglichst große Reaktionsoberfläche für das hochviskose Produkt erzielt wird und gleichzeitig eine sehr steife Gitterkonstruktion für die Bewegung in dem hochviskosen Produkt entsteht. Weitere am Umfang verteilte Langstäbe 23 sind axial angeordnet und an den Scheitelpunkten der U-Bogen über die Gesamtlänge des zweiten Rotorbereichs zur Quervermischung des Produktes befestigt. Hierdurch wird eine zusätzliche Mischung des Produktes im Sumpf erzeugt. Die Langstäbe sind über Zugstäbe 24 mit der Welle des Rotors verbunden, so dass die Zugkräfte, die sich bei der Rotation in der jeweils unteren Lage aus der Durchbiegung ergeben, abgeführt werden können. Dadurch wird eine Versteifung der Gitterkonstruktion und des Rotors gegen Durchbiegung bewirkt. Die gleiche Wirkung wird durch die Anordnung von Langstäben und Verbindung mit den Wellen auch bei den anderen Rotoren erzielt. Die Grundwellen sind aus Rohr konstruiert, in das innenliegende Versteifungen 27 eingesetzt und verbunden sind.

Dies wird vorteilhaft hergerichtet aus einem in den freien Querschnitt des Rohres eng passenden und eingeführten Stabilisator in Form eines Blechkreuzes, das über die gesamte Länge des Rotors reicht und in Abständen durch Bohrungen 28 im Rohr mit dem Rohr verschweißt ist und danach auf Maß bearbeitet wird (s. Fig. 4).

Neben der im Ausführungsbeispiel vorgestellten Anordnung und Lagerung der Rotoren im Reaktor sind weitere Ausführungen möglich:
1. Grundwelle geteilt, mit im Reaktor installiertem Doppellager, vorzugsweise auf einer Abstützung befestigt, jeweils separater hydraulischer Antrieb der zwei Grundwellen in oben beschriebener Ausführung und Steuerung (Zwei-Zonen-Reaktor mit zwei Antrieben).
2. Ausführung wie unter Punkt 1 beschrieben und Lagerung einer Hohlwelle auf einer Grundwelle, ebenfalls mit separatem Antrieb, wie oben beschrieben (Drei-Zonen-Reaktor mit drei Antrieben).
3.Ausführung wie unter Punkt 2 beschrieben, jedoch mit zwei Hohlwellen, jeweils eine auf einer Grundwelle gelagert und separat wie oben beschrieben angetrieben (Vier-Zonen-Reaktors mit vier Antrieben).
4. Durchgehende Grundwelle mit darauf befestigten Rotoren z.B. verschiedener Konstruktion für Reaktionszonen I und II mit einem wie oben beschriebenen Antrieb, eine Hohlwelle als Rotor für die Reaktionszone III auf der Grundwelle gelagert und separat wie oben beschrieben angetrieben, Anordnung der Antriebe dabei auf einer Seite oder an den gegenüberliegenden Stirnseiten des Reaktors (Drei-Zonen-Reaktor mit zwei Antrieben).

## Patentansprüche

1. Vorrichtung zur kontinuierlichen Entgasung von fliessfähigen hochviskosen oder pastösen Polyestern, dessen Rotoren von hydraulischen Systemen angetrieben werden, die ausserhalb des aus zwei oder mehreren mit individuell regelbaren Beheizungen (15) ausgestatteten Reaktionszonen bestehenden Reaktors installiert sind, **dadurch gekennzeichnet, dass**
(a) der oder die Rotoren in mehrere Bereiche aufgeteilt sind,
(b) die Reaktionszonen getrennt wirkende Rotoren, die separat von zugehörigen hydraulischen Systemen angetrieben werden, beinhalten,
(c) die Vorrichtung eine Regelung des Vakuums im System mit der gemessenen intrinsischen Viskosität als Zielgrösse und dem Mittelwert des durch die hydraulischen Systeme ermittelten Drehmoments als weitere Eingangsgrösse aufweist,
(d) der Reaktor zur Generierung der notwendigen Produktoberfläche über eine oder mehrere überspiegelig angeordnete Zugabestellen (16) in Form von Schlitzdüsen verfügt,
(e) der Rotor mindestens in der ersten Reaktionszone eine Produktaufnahmevorrichtung in Form von Schaufeln aufweist, die ein unterschiedliches Verweilen von Produkt in den Schaufeln vermeiden,
(f) der Reaktor über einen oder mehrere Produktausträge entsprechend den zu erreichenden Produkteigenschaften verfügt,
(g) der Rotor in der letzten Reaktionszone zur Einstellung der Produkteigenschaften notwendige Quervermischung eine Konstruktion (19) in Form eines räumlichen Gitters aufweist,
(h) die Rotoren mit Längsstäben (23) an ihrer Peripherie und mit Verankerungen (24) zu ihrer Versteifung und Befestigung an der Welle versehen sind.

2. Vorrichtung nach Anspruch 1 , **dadurch gekennzeichnet, dass** die Kreisläufe für das Hydraulikmedium in den jeweiligen Antriebssystemen zur Fixierung seiner Konsistenz und damit zur Gewährleistung konstanter Bedingungen für eine exakte Messwerterfassung und Messwertverarbeitung mit Temperaturregelungen (9) ausgestattet sind;

3. Vorrichtung nach Anspruch 1 , **dadurch gekennzeichnet, dass** die den Rotoren zugehörigen Wellen einmal als Grundwelle durch den Reaktor geführt ist und mit einem Rotor verbunden ist und eine oder mehrere als Hohlwellen auf der Grundwelle gelagert sind, wobei sie die Stirnwand des Reaktors durchstossen und jeweils an Antriebe bzw . hydraulische Systeme angeschlossen sind

4. Vorrichtung nach Anspruch 1, **dadurch gekennzeichnet, dass** die Grundwelle als zwei geteilte Wellen ausgebildet ist, die an ihren jeweiligen zueinanderliegenden Enden im Reaktor von innen liegenden Wellenlagern getragen und separat angetrieben werden,

5. Vorrichtung nach Ansprüchen 1 und 4, **dadurch gekennzeichnet, dass** der Reaktor nur mit einer Hohlwelle mit ihrer entsprechenden Lagerung und zugehörigem Antriebsystem, linksoder rechtsseitig angeordnet, ausgerüstet ist.

6. Vorrichtung nach den Ansprüchen 1, 3 bis 5, **dadurch gekennzeichnet, dass** die Drehrichtungen der Rotoren im Reaktor gleichoder gegenläufig eingestellt werden kann .

7. Vorrichtung nach Anspruch 3, **dadurch gekennzeichnet, dass** der Antrieb für die Grundwelle und der Antrieb für die Hohlwelle gegenüberliegend an den Stirnseiten des Reaktors angeordnet sind;

8. Vorrichtung nach Anspruch 3, **dadurch gekennzeichnet, dass** der Antrieb für die Grundwelle und der Antrieb für die Hohlwelle an einer Stirnseite des Reaktors angeordnet sind .

9. Vorrichtung nach Anspruch 1, 3 bis 8 , **dadurch gekennzeichnet, dass** die Grundwelle oder Grundwellen aus Rohr bestehen, in das eine innenliegende Versteifung (27) in Form eines Blechkreuzes mit dem Rohr eingesetzt und verbunden ist und in Abständen durch Bohrungen (28) im Rohr mit dem Rohr verschweisst ist

10. Vorrichtung nach Anspruch 1, 3 bis 8 , **dadurch gekennzeichnet, dass** die Rotoren, die nach einem Produktabgang angeordnet sind, zwei funktionale Bereiche aufweisen, wobei:
● der erste Bereich Mitteln aufweist, die zu einer positiven Förderung des Produktes in Richtung des folgenden Austrages und zur Vermeidung der Rückströmung von Produkt mit höherer Viskosität aus der nachfolgenden Reaktionszone des Reaktors geeignet ist, und
● der zweite Bereich eine gezielte oberflächengenerierende und quervermischende Konstruktion aufweist.

11. Vorrichtung nach Anspruch 1 und 10, **dadurch gekennzeichnet, dass** sie mehr als einem Produktabgang aufweist und, dass der Produktabgang (11) nach der Reaktionszone II für ein Produkt mit der intrinsischen Viskosität von 0,6 bis 0,65 dl/g und der Produktabgang (12) nach der Reaktionszone III oder IV für ein Produkt mit der intrinsischen Viskosität von 0,82 bis 0,9 dl/g dimensioniert sind.

12. Vorrichtung nach Anspruch 1, **dadurch gekennzeichnet, dass** das Produkt aus den Schlitzdüsen (16) auf die Rotorscheiben fliesst und dabei eine proaktive Verteilung als Bedingung für eine verbesserte Generierung von Reaktionsoberfläche erreicht wird.

13. Vorrichtung nach Anspruch 12, **dadurch gekennzeichnet, dass** die Schlitzdüsen überspiegelig unter einem Winkel von 90° bis 40° und 40° bis 5° gegen die Senkrechte zur Mittellinie des liegenden Reaktors angeordnet sind

14. Vorrichtung nach Anspruch 12, **dadurch gekennzeichnet, dass** die Schlitzdüsen mit einem Winkel von 5° bis 45° in der Verbreiterung und von 2° bis 30° in der Einziehung zur Vermeidung von Materialaufbau und thermischem Abbau des Produktes gestaltet werden und bündig mit der inneren Oberfläche des Reaktors abschliessen .

15. Vorrichtung nach Anspruch 1, **dadurch gekennzeichnet, dass** die in Rotationsrichtung liegenden Rückseiten der Produktaufnahmevorrichtung um ΔH von 5 bis 50% der Höhe der gegenüber angeordneten Vorderseite liegt und auf der Rückseite Perforation aufweist, die unter dem Rand der Rückwand angeordnet sind.

16. Vorrichtung nach Anspruch 1 und 15 , **dadurch gekennzeichnet, dass** die Schaufeln mit allseits gewölbten Oberflächen gestaltet sind und auch bei einem Stillstand des Rotors entleeren.

17. Vorrichtung nach Anspruch 1 , **dadurch gekennzeichnet, dass** das räumliche Gitter, das zur Erzeugung einer intrinsischen Viskosität von 0,82 bis 0,9 dl/g geeignet ist, auf der Welle oder am Hohlkörper des Rotors in Form von Elementen (20) aus Rundstäben in U-Form befestigt ist, die radial und in Lagen angeordnet sind, wobei die Lagen von zwischengeordneten Abstandsstäben (21) im Abstand gehalten werden und weitere Stäbe (22) als Kreuzverbindungen zwischen den Verbindungspunkten der U-Bogen und Abstandsstäben angebracht sind.

18. Vorrichtung nach Anspruch 1 und 17, **dadurch gekennzeichnet, dass** die räumlichen Gitter mit axial über die Länge des Bereiches (19) zur Quervermischung des Rotors angeordneten Längsstäben (23) versehen sind, die am Scheitelpunkt der U-Stäbe befestigt sind, zur oberflächengenerierenden und quervermischenden Konstruktion für den Prozess dienen und eine Versteifung des räumlichen Gitters bewirken.

19. Vorrichtung nach Anspruch 1 , 4, 5, 10, 18, **dadurch gekennzeichnet, dass** die Rotoren der Reaktionszonen I und II mit axial über die Länge der Rotorbereiche angeordneten Längsstäben (23) versehen sind und die Längsstäbe (23) beidseitig an den Enden des Rotors mit Zugstäben (24) verbunden sind, welche j eweils mit dem anderen Ende an den Wellen verankert sind oder mittels anders geeigneter Konstruktion an den Wellen verankert sind.

## Claims

1. A device for continuous degassing of flowable, highly viscous or pasty polyesters, wherein rotors of the device are driven by hydraulic systems which are installed outside of a reactor configured with two or plural individually controllable heaters (15), wherein
(a) the rotor or the rotors are divided in plural portions,
(b) the reaction zones include separately acting rotors which are separately driven by associated hydraulic systems,
(c) the device includes a control of the vacuum in the system with a measured intrinsic viscosity as a target value and a mean of a torque determined by the hydraulic systems as another input variable,
(d) the reactor includes one or plural inlets (16) arranged on top, configured as slot nozzles in order to generate the required product surface,
(e) the rotor includes a product receiving device configured as blades at least in the first reaction zone, wherein the blades prevent different dwelling times of the product in the blades,
(f) the reactor includes one or plural product outlets according to the product properties to be achieved,
(g) the rotor includes a structure (19) configured as a three-dimensional grid in the last reaction zone for a transversal mixing that is necessary for adjusting product properties,
(h) the rotors are provided with longitudinal rods (23) at their peripheries and with anchors (24) for stiffening and attaching at the shaft.

2. The device according to claim 1, wherein the cycles for a hydraulic medium are configured with temperature controls (9) in the respective drive systems for fixating its consistency and for providing constant conditions for exact measurement value capture and measurement value processing.

3. The device according to claim 1, wherein the shafts associated with the rotors on the one hand side are run through the reactor as a primary shaft and connected with a rotor and one or plural shafts are supported as hollow shafts on the primary shaft, wherein the shafts penetrate the face of the reactor and are respectively connected to drives or hydraulic systems.

4. The device according to claim 1, wherein the primary shaft is configured in two separate shafts which are supported at their respective adjacent ends in the reactor by inner shaft supports and which are separately driven.

5. The device according to claims 1 and 4, wherein the reactor is only configured with one hollow shaft with its respective support and associated drive system on a left side or on a right side.

6. The device according to claims 1, 3 through 5, wherein a direction of rotation of the rotors in the reactor is adjustable co-rotating or counter-rotating.

7. The device according to claim 3, wherein the drive for the primary shaft and the drive for the hollow shaft are arranged opposite to one another at the faces of the reactor.

8. The device according to claim 3, wherein the drive for the primary shaft and the drive for the hollow shaft are arranged at a face of the reactor.

9. The device according to claims 1, 3 through 8, wherein the primary shaft or the primary shafts are made from tubes in which an inner stiffener (27) configured as a sheet metal cross is inserted into the tube and connected with the tube and welded with the tube through boreholes (28) in the tube that are spaced in intervals.

10. The device according to claims 1, 3 through 8, wherein the rotors which are arranged downstream of a product outlet include two functional portions, wherein
- the first portion includes devices which are configured for positive feeding of the product in a direction towards the subsequent outlet and for preventing a backflow of product with higher viscosity from the subsequent reaction zone of the reactor, and wherein
- the second portion includes a structure that generates surface and mixes in transversal direction.

11. The device according to claim 1 and 10, including more than one product outlet and the product outlet (11) after the reaction zone II is configured for a product with an intrinsic viscosity of 0.6 to 0.65 dl/g and the product outlet (12) after the reaction zone III or IV is sized for a product with the intrinsic viscosity of 0.82 to 0.9 dl/g.

12. The device according to claim 1, wherein the product flows from the slot nozzles (16) onto the rotor discs so that a proactive distribution is achieved as a precondition for improved generation of reaction surface.

13. The device according to claim 12, wherein the slot nozzles are arranged on top at an angle of 90° to 40° and 40° to 5° degrees relative to vertical relative to the center line of the prone reactor.

14. The device according to claim 12, wherein the slotted nozzles are configured with an angle of 5° to 45° in the broadening and 2° to 30° in the contraction to avoid material buildup and thermal breakdown of the product and terminate flush with the inner surface of the reactor.

15. The device according to claim 1, wherein the backsides of the product receiver arranged in rotation direction are arranged by ΔH of 5 to 50 % of the height of the front side arranged opposite thereto and include perforation on the backside which is arranged below an edge of the rear wall.

16. The device according to claims 1 and 15, wherein the blades are configured with surfaces cambered on all sides and the blades also empty when the rotor is standing still.

17. The device according to claim 1, wherein a space grid which is configured for generating an intrinsic viscosity of 0.82 to 0.9 dl/g is attached on the shaft or at the hollow element of the rotor configured as elements (20) made from circular rods in U-shape, wherein the circular rods are arranged radially and in layers, wherein the layers are kept at a distance by spacer rods (21) arranged there between and additional rods (22) are arranged as cross braces between the connection points of the U-arcs and spacer rods.

18. The device according to claims 1 and 17, wherein the space grids are provided with longitudinal rods (23) arranged axially over the length of the portion (19) for transversally mixing the rotor, wherein the longitudinal rods which are attached at an apex point of the U-rods are used for surface generating and transversal mixing for the process and cause a stiffening of the space grid.

19. The device according to claims 1, 4, 5, 10, 18, wherein the rotors of the reaction zones I and II are provided with longitudinal rods (23) axially arranged over a length of the rotor portion and the longitudinal rods (23) are connected on both sides at the ends of the rotor with tension rods (24) which are respectively anchored with another end at the shafts or anchored at the shafts through another configuration.

## Revendications

1. Appareil pour le dégazage en continu de polyesters hautement visqueux pâteux capables de s'écouler, dont les rotors sont entraînés par des systèmes hydrauliques qui sont installés à l'extérieur du réacteur composé de deux ou plusieurs zones de réaction équipées de chauffages (15) capables d'être individuellement régulés, **caractérisé en ce que**
(a) le ou les rotors sont subdivisés en plusieurs zones,
(b) les zones de réaction incluent des rotors agissant séparément, qui sont entraînés séparément par des systèmes hydrauliques associés,
(c) l'appareil comprend une régulation du vide dans le système avec pour grandeur cible la viscosité intrinsèque mesurée et avec pour autre grandeur d'entrée la valeur moyenne du couple de rotation déterminé par le système hydraulique,
(d) le réacteur dispose, en vue de générer la surface nécessaire pour le produit, d'un ou plusieurs emplacements d'apport (14) agencés au-dessus du niveau de produit, sous la forme de buses à fente,
(e) le rotor comprend, au moins dans la première zone de réaction, un dispositif de réception de produit sous la forme d'aubes, qui évitent un temps de séjour différent du produit dans les aubes,
(f) le réacteur dispose d'une ou plusieurs sorties de produit, en correspondance des propriétés à atteindre pour le produit,
(g) le rotor comprend dans la dernière zone de réaction une construction (19) sous la forme d'une grille tridimensionnelle pour le mélangeage transversal nécessaire pour établir les propriétés du produit,
(h) les rotors sont pourvus de barreaux longitudinaux (23) à leur périphérie, et d'ancrages (24) pour leurs rigidification et la fixation sur l'arbre.

2. Appareil selon la revendication 1, **caractérisé en ce que** les circuits pour le fluide hydraulique dans les systèmes d'entraînement respectifs sont équipés de régulations de température (9) pour la fixation de sa consistance et ainsi pour garantir des conditions constantes pour une détection exacte des valeurs de mesure et pour le traitement des valeurs de mesure.

3. Appareil selon la revendication 1, **caractérisé en ce que** les arbres associés au rotor comprennent d'une part un arbre de base guidé à travers le réacteur et relié à un rotor, et d'autre part un ou plusieurs arbres creux supportés sur l'arbre de base, lesquels traversent la paroi frontale du réacteur et sont connectés respectivement à des entraînements ou bien à des systèmes hydrauliques.

4. Appareil selon la revendication 1, **caractérisé en ce que** l'arbre de base est réalisé sous forme de deux arbres divisés, qui sont portés à leurs extrémités respectivement rapprochées dans le réacteur par des paliers d'arbres internes et sont entraînés séparément.

5. Appareil selon l'revendication 1 et 4, **caractérisé en ce que** le réacteur est équipé d'un seul arbre creux avec son montage correspondant et son système d'entraînement associé, a gencé du côté gauche ou du côté droit.

6. Appareil selon l'revendication 1, 3 à 5, **caractérisé en ce que** les directions de rotation des rotors dans le réacteur peuvent être réglées dans le même sens ou en sens opposés.

7. Appareil selon la revendication 3, **caractérisé en ce que** l'entraînement pour l'arbre de base et l'entraînement pour l'arbre creux sont agencés de manière opposée au niveau des faces frontales du réacteur.

8. Appareil selon la revendication 3, **caractérisé en ce que** l'entraînement pour l'arbre de base et l'entraînement pour l'arbre creux sont agencés au niveau d'une face frontale du réacteur.

9. Appareil selon les revendications 1, 3 à 8, **caractérisé en ce que** l'arbre de base ou les arbres de base est/sont constitué(s) à partir d'un tube avec une rigidification intérieure (27) sous la forme d'une croix en tôle intégrée dans le tube et reliée à celui-ci, et soudée à intervalles avec le tube à travers des perçages (28) dans le tube.

10. Appareil selon les revendications 1, 3 à 8, **caractérisé en ce que** les rotors, qui sont agencés selon une sortie du produit, comportent deux zones fonctionnelles, telles que :
- la première zone comprend des moyens qui conviennent pour un convoyage positif du produit en direction de la sortie suivante et pour éviter le reflux du produit à haute viscosité hors de la zone de réaction successive du réacteur, et
- la seconde zone comporte une construction qui assure de façon ciblée la génération d'une surface et un mélangeage transversal.

11. Appareil selon les revendications 1 et 10, **caractérisé en ce qu'**il comprend plusieurs sorties de produit, et **en ce que** la sortie de produit (11) après la zone de réaction II est dimensionnée pour un produit qui présente une viscosité intrinsèque de 0,6 à 0,65 dl/g, et la sortie de produit (12) après la zone de réaction III ou IV est dimensionnée pour un produit qui présente une viscosité intrinsèque de 0,82 à 0,9 dl/g.

12. Appareil selon la revendication 1, **caractérisé en ce que** le produit s'écoule depuis les buses à fente (16) pour tomber sur les disques de rotor, et l'on atteint ici une répartition proactive à titre de condition pour une génération améliorée de surface de réaction.

13. Appareil selon la revendication 12, **caractérisé en ce que** les buses à fente sont agencées au-dessus du niveau de produit sous un angle de 90° à 40°, et de 40° à 5° par rapport à la perpendiculaire à l'axe du réacteur horizontal.

14. Appareil selon la revendication 12, **caractérisé en ce que** les buses à fente sont réalisées avec un angle de 5° à 45° en extension et de 2° à 30° en rétraction pour éviter l'accumulation du produit et une dégradation thermique du produit, et se terminent en affleurement avec la surface intérieure du réacteur.

15. Appareil selon la revendication 1, **caractérisé en ce que** les faces, postérieures en direction de rotation, du dispositif de réception de produit, sont situées à une hauteur ΔH de 5 à 50 % de la hauteur de la face antérieure agencée à l'opposé, et comportent sur le côté postérieur des perforations, qui sont agencées au-dessous de la bordure de la paroi postérieure.

16. Appareil selon les revendications 1 et 15, **caractérisé en ce que** les aubes sont configurées avec des surfaces bombées sur tous les côtés, et se vident également à l'arrêt du rotor.

17. Appareil selon la revendication 1, **caractérisé en ce que** la grille tridimensionnelle, qui convient pour la génération d'une viscosité intrinsèque de 0,82 à 0,9 dl/g, est fixée sur l'arbre ou sur le corps creux du rotor, sous la forme d'éléments (20) à partir de barres rondes en forme de U, qui sont agencées en direction radiale et en couches, telles que les couches sont tenues à distance par des barres d'écartement (21) intermédiaires, et dans lequel d'autres barres (22) sont rapportées, à titre de liaison croisée, entre les points de liaison des arcs en U et les barres d'écartement.

18. Appareil selon les revendications 1 et 17, **caractérisé en ce que** les grilles tridimensionnelles sont pourvues de barres longitudinales (23) agencées axialement sur la longueur de la région (19) du rotor pour le mélangeage transversal, lesdites barres étant fixées au niveau du sommet des barres en U, servant pour le processus à titre de construction pour une génération de surface et un mélangeage transversal, et réalisant une rigidification de la grille tridimensionnelle.

19. Appareil selon les revendications 1, 4, 5, 10, 18, **caractérisé en ce que** les rotors des zones de réaction I et II sont pourvus de barres longitudinales (23) agencées axialement sur la longueur des zones de rotor, et les barres longitudinales (23) sont reliées des deux côtés aux extrémités du rotor avec des barres de traction (24), qui sont respectivement ancrées avec l'autre extrémité au niveau des arbres, ou sont ancrées au moyen d'une autre construction appropriée au niveau des arbres.
